# EUROPEAN PATENT SPECIFICATION

(11) **EP 3 861 214 B1**
(45) Date of publication and mention of the grant of the patent: **14.12.2022**
(21) Application number: 19737246.9
(22) Date of filing: 14.06.2019
(51) Int. Cl.: F04D 29/58, H02K 9/197

(54) **PUMP GROUP**
PUMPENGRUPPE
GROUPE DE POMPES

(30) Priority: 05.10.2018 IT 201800009201
(43) Date of publication of application: 11.08.2021
(73) Proprietor: Industrie Saleri Italo S.P.A., 25065 Lumezzane, Brescia (IT)
(72) Inventor: SURACE, Alfonso, 25065 Lumezzane, Brescia (IT); PEDERSOLI, Marco, 25065 Lumezzane, Brescia (IT)
(74) Representative: Gamba, Alessandro
(86) International application number: PCT/IB2019/054983
(87) International publication number: WO 2020/070562

(56) References cited:
- EP-A1- 1 100 177
- EP-A2- 2 523 314
- WO-A1-2017/154837
- WO-A1-2017/192336
- WO-A1-2017/220119
- GB-A- 165 046
- US-A1- 2015 034 027
- US-A1- 2016 290 364

## Description

The present invention concerns a pump group for an engine cooling system of a vehicle. In particular, this cooling system is specific to the cooling of the engine, for example, but not necessarily, the internal combustion engine, of the vehicle.

In the state of the art there are many known embodiments of pump groups for an engine cooling system that differ from each other in size and type of drive.

Specifically, the pump group, object of the present invention, is placed in this context, having an electric-type drive. In other words, the pump group, object of the present invention, comprises at least one electric motor which controls the rotary movement of the impeller comprised therein, thus driving the movement of the cooling liquid which flows into the cooling system to which the pump group may be fluidically connected.

A variety of technical solutions for pump groups are known, comprising an electric drive, in which the main problem of this type of pump group has been addressed, namely the need to effectively cool the electric motor and the components thereof. Examples of such known solutions are shown in documents EP2523314 A2 and US2015/034027 A1.

In particular, there are known embodiments of pump groups in which the cooling liquid present in the chamber where the impeller is housed is used to cool also the electric motor and the components thereof, in particular the rotor comprised therein.

On the other hand, these embodiments have a complex structure and, above all, do not provide particularly effective cooling.

The object of the present invention is to provide a pump group for an engine cooling system that provides effective cooling of the electric drive and in particular of the electric motor thereof, in particular of the stator thereof, resolving the aforesaid problem.

Such object is achieved by a pump group according to claim 1. The claims dependent on this claim refer to preferred variant embodiments, having further advantageous aspects.

The object of the present invention is hereinafter described in detail with the aid of the accompanying figures, wherein:

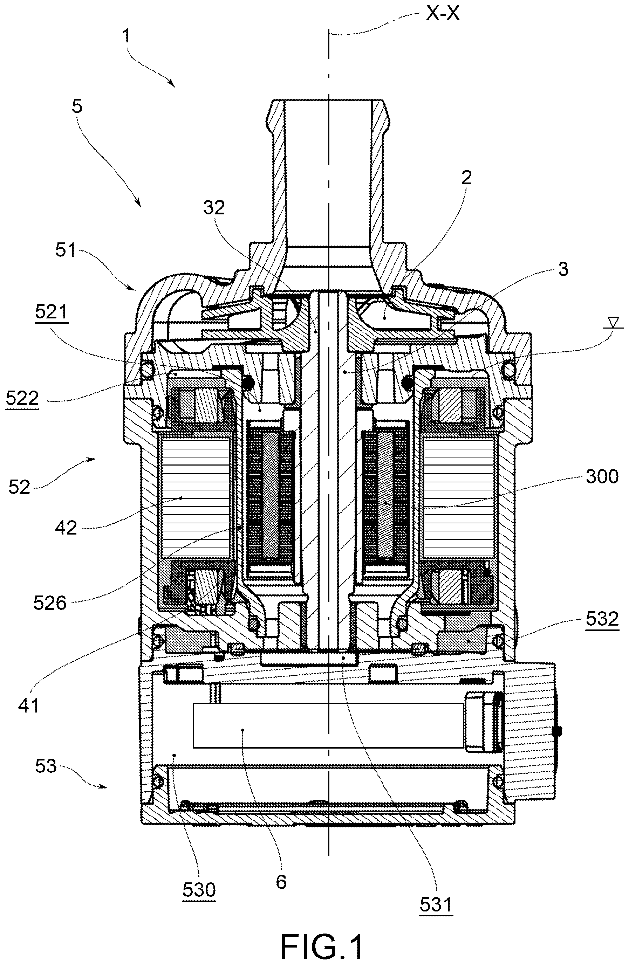

- Figure 1 illustrates a longitudinal sectional view of a pump group in accordance with the present invention, according to one possible embodiment;

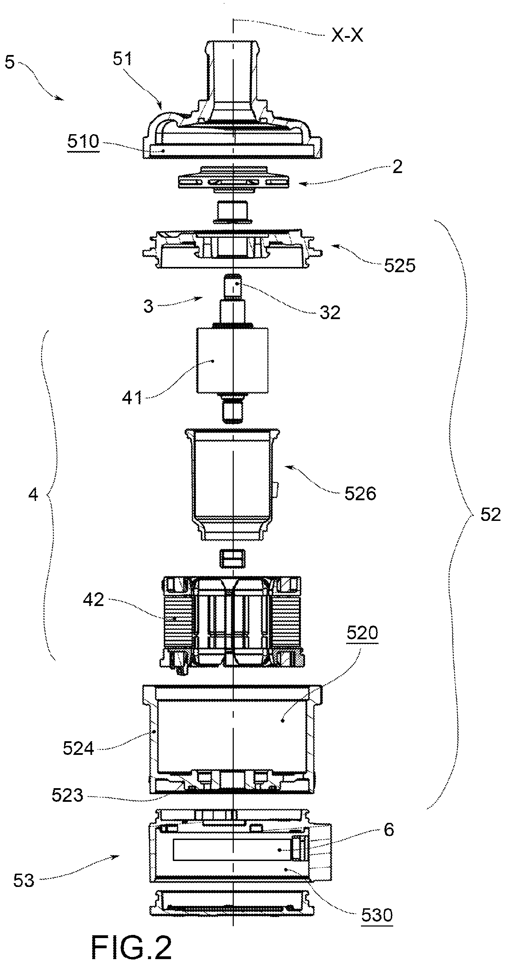

- figure 2 shows a longitudinal sectional view in separate parts of the pump group of Figure 1.

In the aforesaid figures, a pump group for a cooling system of an engine of a vehicle, preferably for cooling the engine, for example an internal combustion engine, is indicated collectively at reference number 1.

The pump group 1, which is the object of the present invention, preferably extends in length with respect to an axis X-X.

The pump group 1, object of the present invention, comprises an impeller 2 rotatable with respect to said axis X-X. In other words, said impeller 2 has a center of rotation that lies on said axis X-X.

Preferably, the impeller 2 is of the radial type, being specially designed to perform a suction action on the cooling liquid preferably in the axial direction and to perform a thrust action preferably in the radial direction.

Moreover, according to the present invention, the pump group 1 comprises a shaft 3 that extends in length along the axis X-X. Preferably, said shaft 3 comprises an impeller end 32 on which is integrally mounted the impeller 2.

According to the present invention, the pump group 1 comprises an electric motor 4 suitable to control the shaft 3 in rotation.

The electric motor 4 comprises a rotor 41 and a stator 42. According to a preferred embodiment, the rotor 41 and the stator 42 are arranged concentrically in relation to the axis X-X.

According to the present invention, the rotor 41 is integrally mounted, for example fitted, to said shaft 3: the rotation of the shaft 3, and in turn of the impeller 2, corresponds to the electronically controlled rotation of the rotor 41. The stator 42 surrounds the rotor 41 axially and circumferentially. In particular, the stator 42 comprises a plurality of stator coils forming stator poles.

According to the present invention, the pump group 1 comprises a pump body 5 extending with respect to the axis X-X, suitable to contain the various operating components of the pump group 1 and suitable to be fluidically connected to the vehicle's cooling system.

The pump body 5 in effect comprises an impeller casing 51 in which the impeller 2 is housed in an impeller chamber 510. The impeller casing 51 is in effect fluidically connected to the cooling system ducts.

In addition, the pump body 5 also comprises a motor casing 52 in which the electric motor 4 is housed. In particular, the motor casing 52 comprises a motor chamber 520 in which the rotor 41 and the stator 42 are housed.

According to a preferred embodiment, the motor casing 52 comprises a bottom wall 523 and side walls 524 extending in height from said bottom wall 523, preferably parallel to the axis X-X.

In addition, preferably, the motor casing 52 comprises a closing plate 525 that engages the side walls 524 to close and delimit the motor chamber 520.

It should be noted, as shown by way of example, and evident from what is described hereinafter, how some of the aforesaid components (the bottom wall 523, the side walls 524, the closing plate 525 may have specially shaped openings, for example for the fluidic passage or for the passage or support of the shaft 3) . The motor casing 2 supports the shaft 3 in free rotation: specifically said bottom wall 523 and said closing plate 525 comprise specially shaped support and/or connection portions (e.g. housing a sliding member such as a brass bearing) especially suited to support the shaft 3 in free rotation around the axis X-X.

In addition, according to the present invention, the motor casing 52 comprises an intermediate tubular wall 526 extending parallel to the axis X-X positioned in an intermediate radial position between the rotor 41 and the stator 42.

The intermediate tubular wall 526 subdivides in the motor chamber 52 a rotor chamber 521 and a stator chamber 522. In other words, the motor chamber 520 is divided into a rotor chamber 521 and a stator chamber 522.

The rotor chamber 521 and the stator chamber 522 are sealingly separated from each other.

According to the present invention, the stator chamber 522 contains a predefined amount of cooling oil. In particular, said predefined amount of cooling oil fills at least in part said stator chamber 522 so that the stator 42 is cooled by convection. In other words, the predefined amount of cooling oil fills at least in part the vacant space present in said stator chamber 522, i.e. the space not occupied by the stator 42.

According to a preferred embodiment, said cooling oil is of the dielectric type. In other words, said cooling oil is an electrical insulator. In still other words, electrical conduction is avoided in the cooling oil.

According to the present invention, the predefined amount of cooling oil fills a part of the stator chamber 522 defining a free surface. In this way at least one part of the stator chamber 522 is empty (i.e. there is air in at least one part of the stator chamber 522). In other words, at least a part of the stator chamber 522 defines a vacant volume.

Preferably, this vacant space is suitable to compensate for any thermal volumetric expansion of the materials, of the stator and/or of the pump group, and of the oil.

In addition, owing to the presence of the aforesaid vacant space, when the pump group 1 is subject to shaking, for example due to the motion of the vehicle, the cooling oil is free to move in the stator chamber 522, promoting a cooling of the stator 42 by forced convection.

According to a preferred embodiment, the predefined amount of cooling oil fills the stator chamber 522 so as to wet all the free surfaces of said coils, for example having a free surface at an axial height greater than the stator 42.

In other words, the entire stator 42 is in an oil bath.

According to the present invention, the presence of the cooling oil in the stator chamber guarantees a cooling of the same according to natural convection, for example in static phases of the vehicle, and according to forced convection, for example in motion phases of the vehicle.

According to a preferred embodiment, the intermediate tubular wall 526 extends axially comprising a first end 526' which sealingly engages the bottom wall 523 and a second end 526" which sealingly engages the closing plate 525. In other words, the intermediate tubular wall 526 may be mounted in the motor chamber.

According to other variant embodiments, the intermediate tubular wall 526 has one of said ends integral with the bottom wall 523 or with the closing plate 525.

According to a preferred embodiment, the rotor chamber 521 is fluidically connected with the impeller chamber 51 so that cooling liquid flows into said rotor chamber 521.

Preferably, the shaft 3 comprises an axial through hole 300 through which the cooling liquid flows.

According to a preferred embodiment, the pump body 5 comprises a control casing 53 housing an electronic control unit 6 connected to the electric motor 4. In other words, the pump group 1 comprises said electronic control unit 6, which controls the electric motor 4, and in particular the stator 42 thereof.

According to a preferred embodiment, the control casing 53 comprises a control chamber 530 in which is housed said electronic control unit 6.

According to a preferred embodiment, the control casing 53 is sealingly mounted on the motor casing 52. Preferably, the control casing 53 is mounted axially opposite the impeller casing.

According to a preferred embodiment, moreover, the control casing 53 and the motor casing 52 delimit an auxiliary cooling chamber 532, fluidically connected to the stator chamber 522 so that also said auxiliary cooling chamber 532 contains cooling oil.

Moreover, according to a preferred embodiment, the control casing 53 and the motor casing 52 delimit a second auxiliary cooling chamber 531 fluidically connected to the rotor chamber 521 so that also said second auxiliary cooling chamber 531 is fluidically reached by cooling liquid.

According to a preferred embodiment, the pump group 1 object of the present invention is of the dual type, comprising, in addition to the electric drive, a mechanical drive that in turn acts on the shaft 3.

Also an object of the present invention is an assembly method of a pump group 1 in accordance with that which is described above. Said method is characterized by the step of pouring a predefined quantity of cooling oil into the stator chamber 522.

In particular, said assembly method first of all provides for the step of inserting the stator 42 in the motor chamber 520, preferably in the stator chamber 522.

Once the predefined amount of cooling oil has been poured into the stator chamber 522, in a preferred embodiment of the cooling method, the step of sealingly mounting the closing plate 525 is carried out, in order to seal the stator chamber 522.

Otherwise, in a preferred embodiment, wherein the closing plate 525 is already mounted, and the oil is thus poured through an opening in the bottom wall 523, the step of sealingly mounting the control casing 53 on the motor casing 52 is provided.

Innovatively, the pump group object of the present invention satisfies the cooling requirements of the electric motor and overcomes the drawbacks pertaining to the solutions of the state-of-the-art mentioned above.

Advantageously, the pump group, object of the present invention, provides a cooling of the electric motor, and in particular of the stator thereof, that is particularly efficient.

Advantageously, the stator operates effectively, and the yield of the electric motor is greater. Advantageously, the stator is cooled effectively due to the presence of the cooling oil.

Advantageously, the stator is effectively cooled by natural convection and/or forced convection. Advantageously, the stator is cooled effectively both in static vehicle situations and in dynamic vehicle situations.

Advantageously, the predefined quantity of oil in the stator chamber is such as to allow and compensate for any thermal expansion of the stator, the pump group and/or the cooling oil and at the same time to reduce the spaces in the stator chamber.

Advantageously, the pump group has a simple and compact shape and size. Advantageously, in effect, the pump group does not require specific components for cooling the electric motor and in particular the stator.

Advantageously, an embodiment of a dual pump group that makes full use of the aforesaid advantages is foreseeable.

It is clear that a person skilled in the art, in order to meet contingent needs, may make changes to the pump group, all contained within the scope of protection as defined by the following claims.

Moreover, each variant described as belonging to a possible embodiment may be implemented independently of the other variants described.

## Claims

1. A pump group (1) of a cooling system of a vehicle engine, the pump group extending with respect to an axis (X-X) and comprising:
- an impeller (2) rotatable around the axis (X-X);
- a shaft (3) extending along the axis (X-X) comprising an impeller end (322) on which the impeller (2) is integrally mounted;
- an electric motor (4) comprising a rotor (41) integrally mounted on the shaft (3) and a stator (42) which surrounds the rotor axially and circumferentially (41);
- a pump body (5) extending with respect to the axis (X-X) comprising:
i) an impeller casing (51) which houses the impeller (2) in an impeller chamber (510);
ii) a motor casing (52) which houses the electric motor (4) in a motor chamber (520), wherein the motor casing (52) comprises an intermediate tubular wall (526) which extends parallel to the axis (X-X) positioned in an intermediate radial position between the rotor (41) and the stator (42), so that a rotor chamber (521) and a stator chamber (522) are defined in the motor casing;
wherein the rotor chamber (521) and the stator chamber (522) are sealingly separated from each other;
wherein said pump group (1) is **characterized in that** the stator chamber contains a predefined amount of cooling oil which at least partially fills the stator chamber (522) in a manner such as to cool the stator by convection (42), wherein the predetermined amount of cooling oil fills a part of the stator chamber (522) defining a free surface, such that, with the pump group (1) subject to shaking, for example due to the motion of the vehicle, the cooling oil is free to move in the stator chamber (522) promoting a cooling of the stator (42) by forced convection.

2. Pump group (1) according to claim 1, wherein said cooling oil is of the dielectric type.

3. Pump group (1) according to any one of the preceding claims, wherein the stator (42) comprises a plurality of stator coils forming stator poles, wherein said predetermined amount of cooling oil fills the stator chamber (522) so as to wet all the free surfaces of said coils, for example having a free surface at an axial height greater than the stator (42).

4. Pump group (1) according to any one of the preceding claims, wherein the motor casing (52) comprises a bottom wall (523) and side walls (524) which extend in height, wherein the motor casing (52) comprises a closing plate (525) which sealingly engages the side walls (524) to close and delimit the motor chamber (520).

5. Pump group (1) according to any one of the preceding claims, wherein the intermediate tubular wall (526) extends axially comprising a first end (526'), which sealingly engages the bottom wall (523), and a second end (526"), which sealingly engages the closing plate (525).

6. Pump group (1) according to any one of the preceding claims, wherein the rotor chamber (521) is fluidically connected to the impeller chamber (51) so that cooling liquid flows into said rotor chamber (521).

7. Pump group (1) according to claim 6, wherein the shaft (3) comprises an axial through hole (300) through which cooling liquid flows.

8. Pump group (1) according to any one of the preceding claims, wherein the pump body (5) comprises a control casing (53) which defines a control chamber (530) housing an electronic control unit (6), connected to the electric motor (4), wherein said control casing (53) is sealingly mounted on the motor casing (52).

9. Pump group (1) according to claim 8, wherein the control casing (53) and the motor casing (52) delimit an auxiliary cooling chamber (532) fluidically connected to the stator chamber (522) so that also said auxiliary cooling chamber (532) contains cooling oil.

10. Pump group (1) according to claim 9 in combination with claim 6 or with claim 7, wherein the control casing (53) and the motor casing (52) delimit a second auxiliary cooling chamber (531) fluidically connected to the rotor chamber (521) so that said second auxiliary cooling chamber (531) is also fluidically reached by cooling liquid.

11. Pump group (1) according to any one of the preceding claims, further comprising a mechanical drive operatively connected to the shaft (3) to control the rotation thereof with or in place of the electric motor.

12. Assembly method of a pump group (1) according to any one of the preceding claims, comprising the step of:
- pouring a predefined amount of cooling oil in the stator chamber (522).

13. Assembly method of a pump group (1) according to claim 12 in combination with claim 4, comprising the step of:
- inserting the stator (42) in the motor chamber (520), preferably in the stator chamber (522);
- pouring a predefined amount of cooling oil in the stator chamber (522);
- sealingly mounting the closing plate (525) so as to seal the stator chamber (522).

14. Assembly method of a pump group (1) according to claim 12 in combination with claims 9 and 10, comprising the step of:
- inserting the stator (42) in the motor chamber (520), preferably in the stator chamber (522);
- sealingly mounting the closing plate (525) so as to seal the stator chamber (522);
- pouring a predefined amount of cooling oil in the stator chamber (522);
- sealingly mounting the control casing (53) on the motor casing (52).

## Patentansprüche

1. Pumpengruppe (1) eines Kühlsystems eines Fahrzeugmotors, wobei sich die Pumpengruppe in Bezug auf eine Achse (X-X) erstreckt und umfasst:
- ein Laufrad (2), das um die Achse (X-X) drehbar ist;
- eine Welle (3), die sich entlang der Achse (X-X) erstreckt, umfassend ein Laufradende (322), an dem das Laufrad (2) integral bzw. einstückig montiert ist;
- einen Elektromotor (4), der einen integral an der Welle (3) montierten Rotor (41) und einen Stator (42) umfasst, der den Rotor axial und umfangsmäßig bzw. in Umfangsrichtung (41) umgibt;
- einen Pumpenkörper (5), der sich in Bezug auf die Achse (X-X) erstreckt, umfassend:
i) ein Laufradgehäuse (51), das das Laufrad (2) in einer Laufradkammer (510) unterbringt;
ii) ein Motorgehäuse (52), das den Elektromotor (4) in einer Motorkammer (520) unterbringt, wobei das Motorgehäuse (52) eine rohrförmige Zwischenwand (526) umfasst, die sich parallel zu der Achse (X-X) erstreckt, die in einer radialen Zwischenposition zwischen dem Rotor (41) und dem Stator (42) positioniert ist, so dass eine Rotorkammer (521) und eine Statorkammer (522) in dem Motorgehäuse definiert sind;
wobei die Rotorkammer (521) und die Statorkammer (522) abdichtend voneinander separiert sind;
wobei die Pumpengruppe (1) **dadurch gekennzeichnet ist, dass** die Statorkammer eine vordefinierte Menge an Kühlöl enthält, das die Statorkammer (522) zumindest teilweise auf eine solche Weise füllt, dass der Stator durch Konvektion (42) gekühlt wird, wobei die vorbestimmte Menge an Kühlöl einen Teil der Statorkammer (522) füllt, der eine freie Fläche bzw. Oberfläche definiert, so dass, wenn die Pumpengruppe (1) Erschütterungen ausgesetzt ist, beispielsweise aufgrund der Bewegung des Fahrzeugs, das Kühlöl sich frei in der Statorkammer (522) bewegen kann, was eine Kühlung des Stators (42) durch erzwungene Konvektion fördert.

2. Pumpengruppe (1) nach Anspruch 1, wobei das Kühlöl vom dielektrischen Typ ist.

3. Pumpengruppe (1) nach einem der vorhergehenden Ansprüche, wobei der Stator (42) eine Mehrzahl von Statorspulen umfasst, die Statorpole bilden, wobei die vorbestimmte Menge an Kühlöl die Statorkammer (522) füllt, um alle freien Flächen der Spulen zu benetzen, wobei beispielsweise eine freie Fläche in einer axialen Höhe ist, die größer ist als der Stator (42).

4. Pumpengruppe (1) nach einem der vorhergehenden Ansprüche, wobei das Motorgehäuse (52) eine Bodenwand (523) und Seitenwände (524) umfasst, die sich in der Höhe erstrecken, wobei das Motorgehäuse (52) eine Schließ- bzw. Verschlussplatte (525) umfasst, die abdichtend mit den Seitenwänden (524) in Eingriff ist, um die Motorkammer (520) zu verschließen und zu begrenzen.

5. Pumpengruppe (1) nach einem der vorhergehenden Ansprüche, wobei sich die rohrförmige Zwischenwand (526) axial erstreckt, umfassend ein erstes Ende (526'), das abdichtend mit der Bodenwand (523) in Eingriff ist, und ein zweites Ende (526"), das abdichtend mit der Verschlussplatte (525) in Eingriff ist.

6. Pumpengruppe (1) nach einem der vorhergehenden Ansprüche, wobei die Rotorkammer (521) fluidisch mit der Laufradkammer (51) verbunden ist, so dass Kühlflüssigkeit in die Rotorkammer (521) strömt.

7. Pumpengruppe (1) nach Anspruch 6, wobei die Welle (3) eine axiale Durchgangsbohrung (300) aufweist, durch die Kühlflüssigkeit strömt.

8. Pumpengruppe (1) nach einem der vorhergehenden Ansprüche, wobei der Pumpenkörper (5) ein Steuer- bzw. Regelgehäuse (53) umfasst, das eine Steuer- bzw. Regelkammer (530) definiert, die eine elektronische Steuer- bzw. Regeleinheit (6) unterbringt, die mit dem Elektromotor (4) verbunden ist, wobei das Steuer- bzw. Regelgehäuse (53) abdichtend an dem Motorgehäuse (52) montiert ist.

9. Pumpengruppe (1) nach Anspruch 8, wobei das Steuer- bzw. Regelgehäuse (53) und das Motorgehäuse (52) eine Hilfs- bzw. Nebenkühlkammer (532) begrenzen, die fluidisch mit dem Statorkammer (522) verbunden ist, so dass auch die Nebenkühlkammer (532) Kühlöl enthält.

10. Pumpengruppe (1) nach Anspruch 9 in Kombination mit Anspruch 6 oder mit Anspruch 7, wobei das Steuer- bzw. Regelgehäuse (53) und das Motorgehäuse (52) eine zweite Hilfs- bzw. Nebenkühlkammer (531) begrenzen, die fluidisch mit der Rotorkammer (521) verbunden ist, so dass die zweite Nebenkühlkammer (531) ebenfalls fluidisch von Kühlflüssigkeit erreicht wird.

11. Pumpengruppe (1) nach einem der vorangehenden Ansprüche, ferner umfassend einen mechanischen Antrieb, der operativ mit der Welle (3) verbunden ist, um deren Drehung mit dem oder anstelle des Elektromotors zu steuern bzw. zu regeln.

12. Montageverfahren einer Pumpengruppe (1) nach einem der vorhergehenden Ansprüche, umfassend den Schritt:
- Gießen einer vordefinierten Menge an Kühlöl in die Statorkammer (522).

13. Montageverfahren einer Pumpengruppe (1) nach Anspruch 12 in Kombination mit Anspruch 4, umfassend den Schritt:
- Einsetzen des Stators (42) in die Motorkammer (520), vorzugsweise in die Statorkammer (522);
- Gießen einer vordefinierten Menge an Kühlöl in die Statorkammer (522);
- abdichtendes Montieren der Verschlussplatte (525), um die Statorkammer (522) abzudichten.

14. Montageverfahren einer Pumpengruppe (1) nach Anspruch 12 in Kombination mit den Ansprüchen 9 und 10, umfassend den Schritt:
- Einsetzen des Stators (42) in die Motorkammer (520), vorzugsweise in die Statorkammer (522);
- abdichtendes Montieren der Verschlussplatte (525), um die Statorkammer (522) abzudichten;
- Gießen einer vordefinierten Menge an Kühlöl in die Statorkammer (522);
- adichtendes Montieren des Steuer- bzw. Regelgehäuses (53) an dem Motorgehäuse (52).

## Revendications

1. Groupe de pompe (1) d'un système de refroidissement d'un moteur de véhicule, le groupe de pompe s'étendant par rapport à un axe (X-X) et comprenant :
- une turbine (2) rotative autour de l'axe (X-X) ;
- un arbre (3) s'étendant le long de l'axe (X-X) comprenant une extrémité de turbine (322) sur laquelle la turbine (2) est montée d'un seul tenant ;
- un moteur électrique (4) comprenant un rotor (41) monté d'un seul tenant sur l'arbre (3) et un stator (42) qui entoure le rotor (41) axialement et de manière circonférentielle ;
- un corps de pompe (5) s'étendant par rapport à l'axe (X-X) comprenant :
i) un carter de turbine (51) qui abrite la turbine (2) dans une chambre de turbine (510) ;
ii) un carter de moteur (52) qui abrite le moteur électrique (4) dans une chambre de moteur (520), dans lequel le carter de moteur (52) comprend une paroi tubulaire intermédiaire (526) qui s'étend parallèlement à l'axe (X-X) positionnée dans une position radiale intermédiaire entre le rotor (41) et le stator (42), de façon à ce qu'une chambre de rotor (521) et une chambre de stator (522) soient définies dans le carter de moteur ;
dans lequel la chambre de rotor (521) et la chambre de stator (522) sont séparées de manière étanche l'une de l'autre ;
dans lequel ledit groupe de pompe (1) est **caractérisé en ce que** la chambre de stator contient une quantité prédéfinie d'huile de refroidissement qui remplit au moins partiellement la chambre de stator (522) de manière à refroidir le stator (42) par convection, dans lequel la quantité prédéterminée d'huile de refroidissement remplit une partie de la chambre de stator (522) en définissant une surface libre, de sorte que, lorsque le groupe de pompe (1) est secoué, par exemple en raison du déplacement du véhicule, l'huile de refroidissement soit libre de se déplacer dans la chambre de stator (522) en favorisant un refroidissement du stator (42) par convection forcée.

2. Groupe de pompe (1) selon la revendication 1, dans lequel ladite huile de refroidissement est du type diélectrique.

3. Groupe de pompe (1) selon l'une quelconque des revendications précédentes, dans lequel le stator (42) comprend une pluralité de bobines de stator formant des pôles de stator, dans lequel ladite quantité prédéterminée d'huile de refroidissement remplit la chambre de stator (522) de manière à humidifier toutes les surfaces libres desdites bobines, par exemple celles ayant une surface libre à une hauteur axiale supérieure au stator (42).

4. Groupe de pompe (1) selon l'une quelconque des revendications précédentes, dans lequel le carter de moteur (52) comprend une paroi de fond (523) et des parois latérales (524) qui s'étendent en hauteur, dans lequel le carter de moteur (52) comprend une plaque de fermeture (525) qui vient en prise de manière étanche avec les parois latérales (524) pour fermer et délimiter la chambre de moteur (520).

5. Groupe de pompe (1) selon l'une quelconque des revendications précédentes, dans lequel la paroi tubulaire intermédiaire (526) s'étend axialement en comprenant une première extrémité (526'), qui vient en prise de manière étanche avec la paroi de fond (523), et une seconde extrémité (526"), qui vient en prise de manière étanche avec la plaque de fermeture (525).

6. Groupe de pompe (1) selon l'une quelconque des revendications précédentes, dans lequel la chambre de rotor (521) est reliée de manière fluidique à la chambre de turbine (51) de façon à ce qu'un liquide de refroidissement s'écoule dans ladite chambre de rotor (521).

7. Groupe de pompe (1) selon la revendication 6, dans lequel l'arbre (3) comprend un trou traversant axial (300) à travers lequel un liquide de refroidissement s'écoule.

8. Groupe de pompe (1) selon l'une quelconque des revendications précédentes, dans lequel le corps de pompe (5) comprend un carter de commande (53) qui définit une chambre de commande (530) abritant une unité de commande électronique (6), connectée au moteur électrique (4), dans lequel ledit carter de commande (53) est monté de manière étanche sur le carter de moteur (52).

9. Groupe de pompe (1) selon la revendication 8, dans lequel le carter de commande (53) et le carter de moteur (52) délimitent une chambre de refroidissement auxiliaire (532) reliée de manière fluidique à la chambre de stator (522) de façon à ce que ladite chambre de refroidissement auxiliaire (532) contienne elle aussi de l'huile de refroidissement.

10. Groupe de pompe (1) selon la revendication 9 en association avec la revendication 6 ou avec la revendication 7, dans lequel le carter de commande (53) et le carter de moteur (52) délimitent une seconde chambre de refroidissement auxiliaire (531) reliée de manière fluidique à la chambre de rotor (521) de façon à ce que ladite seconde chambre de refroidissement auxiliaire (531) soit elle aussi atteinte de manière fluidique par un liquide de refroidissement.

11. Groupe de pompe (1) selon l'une quelconque des revendications précédentes, comprenant en outre un entraînement mécanique relié fonctionnellement à l'arbre (3) pour commander la rotation de celui-ci avec le ou à la place du moteur électrique.

12. Procédé d'assemblage d'un groupe de pompe (1) selon l'une quelconque des revendications précédentes, comprenant l'étape consistant à :
- verser une quantité prédéfinie d'huile de refroidissement dans la chambre de stator (522).

13. Procédé d'assemblage d'un groupe de pompe (1) selon la revendication 12 en association avec la revendication 4, comprenant les étapes consistant à :
- insérer le stator (42) dans la chambre de moteur (520), de préférence dans la chambre de stator (522) ;
- verser une quantité prédéfinie d'huile de refroidissement dans la chambre de stator (522) ;
- monter de manière étanche la plaque de fermeture (525) de manière à étanchéifier la chambre de stator (522).

14. Procédé d'assemblage d'un groupe de pompe (1) selon la revendication 12 en association avec les revendications 9 et 10, comprenant les étapes consistant à :
- insérer le stator (42) dans la chambre de moteur (520), de préférence dans la chambre de stator (522) ;
- monter de manière étanche la plaque de fermeture (525) de manière à étanchéifier la chambre de stator (522) ;
- verser une quantité prédéfinie d'huile de refroidissement dans la chambre de stator (522) ;
- monter de manière étanche le carter de commande (53) sur le carter de moteur (52).
